(19) Europäisches Patentamt
European Patent Office
Office européen des brevets

(11) EP 4 435 026 A1

(12) **EUROPEAN PATENT APPLICATION**
published in accordance with Art. 153(4) EPC

(43) Date of publication:
**25.09.2024 Bulletin 2024/39**

(21) Application number: **22896030.8**

(22) Date of filing: **15.11.2022**

(51) International Patent Classification (IPC):
***C08F 297/08*** (2006.01) ***H01M 50/417*** (2021.01)
***H01M 50/494*** (2021.01) ***C08F 293/00*** (2006.01)
***C08F 4/659*** (2006.01) ***C08F 4/646*** (2006.01)

(52) Cooperative Patent Classification (CPC):
**C08F 4/646; C08F 4/659; C08F 293/00;**
**C08F 297/08; H01M 50/417; H01M 50/494;**
Y02E 60/10; Y02P 20/52

(86) International application number:
**PCT/KR2022/018010**

(87) International publication number:
**WO 2023/090824 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 KR 20210159387**
**18.11.2021 KR 20220057297**

(71) Applicant: **Korea Petrochemical Ind. Co., Ltd**
**Seoul 03035 (KR)**

(72) Inventors:
- **KIM, Younghwan**
**Ulsan 44465 (KR)**
- **KANG, Kapku**
**Ulju-gun Ulsan 44922 (KR)**
- **KIM, Hyecheol**
**Ulsan 44644 (KR)**
- **KIM, Dongjun**
**Ulsan 44737 (KR)**
- **KIM, Sanggon**
**Ulsan 44236 (KR)**
- **SON, Hojin**
**Ulju-gun Ulsan 44932 (KR)**
- **HA, Hyun Soo**
**Ulsan 44708 (KR)**

(74) Representative: **Caspary, Karsten et al**
**Kroher-Strobel**
**Rechts- und Patentanwälte PartmbB**
**Bavariaring 20**
**80336 München (DE)**

(54) **(ULTRA)HIGH MOLECULAR WEIGHT POLYETHYLENE-BASED BLOCK COPOLYMER, MANUFACTURING METHOD THEREOF, AND SECONDARY BATTERY SEPARATOR FABRICATED USING SAME AS RAW MATERIAL**

(57) The present invention relates to an (ultra)high molecular weight polyethylene-based block copolymer having (ultra)high molecular weight polyethylene as a first-stage polymer in a linear structure through multi-stage polymerization and having a viscosity average molecular weight of 400,000 to 5,000,000 g/mol under the conditions that hydrogen ($H_2$) as a molecular weight regulator is added in a trace amount or not added, a producing method therefor, and a secondary battery separator produced using the same as a raw material. The present invention provides improved kneading property, film surface and other properties compared to a heterogeneous composite secondary battery separator made of polyethylene and polypropylene processed by simple blending.

EP 4 435 026 A1

# Description

## Technical Field

The present invention relates to an (ultra)high molecular weight polyethylene-based block copolymer, a producing method therefor, and a secondary battery separator fabricated using the same as a raw material. More particularly, the present invention relates to an (ultra)high molecular weight polyethylene-based block copolymer, a producing method therefor, and a secondary battery separator fabricated using the same as a raw material capable of improving uniformity and processing stability by producing an (ultra)high molecular weight polyethylene-based block copolymer having (ultra)high molecular weight polyethylene as a first-stage polymer in a linear structure through multi-stage polymerization, in order to solve problems caused by reduced compatibility between polyethylene and polypropylene during the mixing process of (ultra)high molecular weight polyethylene and ultrahigh molecular weight polypropylene applied to a secondary battery separator.

## Background Art

In general, polypropylene polymerization is performed by using magnesium chloride as a carrier, titanium chloride containing an internal electron donor such as phthalate, di-ether, and succinate compounds, as a main catalyst, alkylaluminum as a co-catalyst, and a silicon compound containing an alkoxy group as a promoter which is an external electron donor, and the polymerization is performed in a reaction form such as slurry polymerization, bulk polymerization, or gas phase polymerization, and polyethylene polymerization is performed by slurry polymerization using a titanium catalyst with magnesium chloride as a carrier as a main catalyst, and an alkylaluminum compound as a co-catalyst.

The polyethylene and polypropylene produced above are generally not composited due to low compatibility, but some thereof are mixed and used depending on specific uses such as ropes, and polyethylene and polypropylene block copolymers are used as compatibilizers to increase kneading property, thereby making a composite.

Despite the lack of compatibility, recently, in order to improve the performance of a secondary battery separator, separators have been produced by mixing polypropylene with (ultra)high molecular weight polyethylene. However, general-purpose polypropylene has poor processability and mechanical properties due to low viscosity and has heterogeneity depending on the content of (ultra)high molecular weight polyethylene and ultrahigh molecular weight polypropylene, so that there is a limit in the production of a separator with uniform performance.

[Prior art references]

[Patent references]

(Patent Reference 0001) European Patent EP 3 157 966 B1
(Patent Reference 0002) U.S. Patent US 8008417
(Patent Reference 0003) Korean Patent KR 10-1161752

## Disclosure

## Technical Problem

In order to solve the problems described above, an object of the present invention is to provide an (ultra)high molecular weight polyethylene-based block copolymer, a producing method therefor, and a secondary battery separator fabricated using the same as a raw material, for improving polymerization conditions for controlling selection of a main catalyst capable of polymerizing polyethylene and polypropylene, a combination ratio of a main catalyst, a co-catalyst, and a promoter, etc., and molecular weights, basic properties, etc. of polyethylene and polypropylene during multi-stage polymerization, and performance of a secondary battery separator.

## Solution to Problem

To achieve the above object, the present invention describes a method for producing an (ultra)high molecular weight polyethylene-based block copolymer including: (a) mixing and adding a co-catalyst (x), which is an alkylaluminum compound, a main catalyst (y) which is a titanium compound and a promoter (z) which is a silicon compound in a presence of a hydrocarbon solvent containing 1 to 20 carbon atoms in a reactor; (b) adding only an ethylene monomer or both an

ethylene monomer and a trace amount of hydrogen to a mixed solution obtained in step (a) and performing a first-stage polymerization reaction; (c) removing unreacted monomers in the reactor after the first-stage polymerization reaction; (d) adding propylene monomers to the mixed solution obtained in step (c) and performing a second-stage polymerization reaction; and (e) filtering and drying polyethylene-polypropylene block copolymer powder from the reaction solution obtained in step (d).

Here, the co-catalyst (x) may be at least any one compound selected from a group consisting of triethylaluminum, trimethylaluminum, triisobutylaluminum, trioctylaluminum, diethylaluminum chloride, diethylaluminum bromide, diethylaluminum iodide, diethylaluminum fluoride, ethylaluminum dichloride, dimethylaluminum chloride, metalaluminum dichloride and ethylaluminum sesquichloride.

Here, the promoter (z) may be at least any one compound selected from a group consisting of cyclohexylmethyldimethoxy silane (CMCD), cyclohexyl-n-propyldimethoxy silane (CPDM), cyclohexyl-i-propyldimethoxy silane (CIPDM), cyclohexyl-n-butyldimethoxy silane (CBDM), cyclohexyl-i-butyldimethoxy silane (CIBDM), cyclohexyl-n-hexyldimethoxy silane (CHDM), cyclohexyl-n-octyldimethoxy silane (CODM), cyclohexyl-n-decyldimethoxy silane (CDeDM), dimethyldimethoxy silane, dimethyldiethoxy silane, dicyclopentyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy silane, ethyltriethoxy silane, vinyltriethoxy silane, phenyltriethoxy silane, butyltriethoxy silane, ethyltriisopropoxy silane, vinyltributoxy silane, and methyltriaryloxy silane.

Here, Al in the co-catalyst (x), which is the alkylaluminum compound, may be included in 10 to 500 moles with respect to 1 mole of Ti in the main catalyst (y), which is the titanium compound.

Here, Si in the promoter (z), which is the silicon compound, may be included in 1 to 40 moles with respect to 1 mole of Ti in the main catalyst (y), which is the titanium compound.

Here, a polymerization temperature in the first and second-stage polymerization reactions may be 30 to 90°C.

Here, a polymerization pressure in the first and second-stage polymerization reactions may be 1 to 40 bar.

Here, in the first-stage polymerization reaction, 3 to 95 wt% of the ethylene monomers are added, and in the second-stage polymerization reaction, 6 to 98 wt% of the propylene monomers are added.

Additionally, to achieve the above object, the present invention further describes an (ultra)high molecular weight polyethylene-based block copolymer comprising: 25 to 90 wt% of (ultra) high molecular weight polyethylene; and 10 to 75 wt% of ultrahigh molecular weight polypropylene with respect to 100 wt% of the block copolymer. The (ultra)high molecular weight polyethylene has a viscosity average molecular weight of 400,000 to 5,000,000 g/mol. The ultrahigh molecular weight polypropylene has the viscosity average molecular weight of 1,000,000 to 4,000,000 g/mol, and the block copolymer has the viscosity average molecular weight of 400,000 to 5,000,000 g/mol under conditions of adding no hydrogen or adding a trace amount of hydrogen.

Here, the block copolymer may be produced by performing a first-stage polymerization reaction in which only ethylene monomers are added to a mixed solution or both the ethylene monomers and a trace amount of hydrogen are added, and then performing a second-stage polymerization reaction in which propylene monomers are added to the mixed solution to have the (ultra)high molecular weight polyethylene as a first-stage polymer in a linear structure.

Here, the block copolymer may have an apparent density of 0,30 to 0,50 g/cm$^3$.

Here, the block copolymer may have an inorganic content of 1 to 30 ppm, and the inorganic material is used as a catalyst in a polymerization process.

Here, the block copolymer may have a particle diameter of 10 to 400 $\mu$m.

Additionally, to achieve the above object, the present invention further describes a secondary battery separator fabricated using an (ultra)high molecular weight polyethylene-based block copolymer as a raw material, wherein the (ultra)high molecular weight polyethylene-based block copolymer includes 25 to 90 wt% of (ultra)high molecular weight polyethylene; and 10 to 75 wt% of ultrahigh molecular weight polypropylene based on 100 wt% of the block copolymer, wherein the (ultra)high molecular weight polyethylene has a viscosity average molecular weight of 400,000 to 5,000,000 g/mol, the ultrahigh molecular weight polypropylene has the viscosity average molecular weight of 1,000,000 to 4,000,000 g/mol, and the block copolymer has the viscosity average molecular weight of 400,000 to 5,000,000 g/mol under conditions of adding no hydrogen or adding a trace amount of hydrogen.

Here, the secondary battery separator may have a puncture strength of 300 to 600 gf.

Here, the secondary battery separator may have a tensile strength of 800 to 2,000 kgf/cm$^2$.

### Effects of Invention

According to the (ultra)high molecular weight polyethylene-based block copolymer of the present invention as described above, there is an effect of improving kneading property, film surface, and other physical properties, compared to a secondary battery separator processed by simply mixing heterogeneous composite materials of polyethylene and polypropylene, as well as application as a compatibilizer for increasing a kneading property when mixing and processing

polyethylene and polypropylene with low compatibility.

## Best mode for Implementation of the Invention

The terms used herein are intended to describe embodiments and are not intended to limit the present invention. In the present specification, a singular form also includes a plural form unless specifically stated in the text. As used in the specification, "comprises" and/or "made of" do not preclude the presence or addition of one or more other components, steps, operations and/or elements mentioned.

Unless otherwise defined, all terms used in the present specification may be used in a meaning commonly understood by those skilled in the art to which the present invention pertains. In addition, terms defined in commonly used dictionaries are not ideally or excessively interpreted unless clearly and specifically defined.

In order to improve the performance of a secondary battery separator mixed with (ultra)high molecular weight polyethylene and polypropylene, it is required to select a catalyst capable of multi-stage polymerization of (ultra)high molecular weight polyethylene and ultrahigh molecular weight polypropylene, and there is a need to secure technology of controlling the molecular weights of polyethylene and polypropylene and the degree of polymerization of polyethylene and polypropylene in multi-stage polymerization. In addition, in order to facilitate the producing, supplying, and processing of powder form, it is required to control the particle shape, particle size, etc. of the powder.

The present inventors have confirmed that an (ultra)high molecular weight polyethylene-based block copolymer with improved performance of a secondary battery separator may be produced through molecular weight regulation and multi-stage polymerization of polyethylene and polypropylene according to the present invention as follows, and then completed the present invention. Meanwhile, the term "ultrahigh molecular weight" as used herein means a viscosity average molecular weight of 1,000,000 g/mol or greater.

In addition, the term "high molecular weight" as used herein refers to a viscosity average molecular weight of more than 400,000 g/mol and less than 1,000,000 g/mol.

### Selection of titanium catalyst for polymerization of polyethylene and polypropylene

In order to achieve the above-mentioned purpose, the present invention requires the selection of a main catalyst capable of polymerizing polyethylene and polypropylene and securing a stable powder form, and a combination ratio of a main catalyst, a co-catalyst, and a promoter. A titanium chloride catalyst using Ziegler-Natta-based magnesium chloride as a carrier has different degrees of polymerization of polyethylene and polypropylene depending on an acid value of titanium, and has a great impact on a molecular weight and a particle shape.

In particular, in the case of a titanium trivalent catalyst, both polyethylene and polypropylene polymerization are possible, so that there is provided a method for selecting a titanium trivalent catalyst as a catalyst capable of multi-stage polymerization of (ultra)high molecular weight polyethylene of the present invention and ultrahigh molecular weight polypropylene, and controlling a ratio of a co-catalyst and a promoter to control the molecular weight and secure a stable particle shape during polyethylene polymerization.

More specifically, in the present invention, there is provided a multi-stage polymerization method of an (ultra)high molecular weight polyethylene-based block copolymer by using a trivalent titanium catalyst as the main catalyst which is the magnesium chloride titanium compound, and according to an input ratio of a co-catalyst which is an alkylaluminum compound, and a promoter which is a silicon compound containing an alkoxy group.

### Method for producing (ultra)high molecular weight polyethylene-based block copolymer

In the present invention, there is provided a multi-stage polymerization method of an (ultra)high molecular weight polyethylene-based block copolymer by using a trivalent titanium catalyst as the main catalyst which is the magnesium chloride titanium compound, and according to an input ratio of a co-catalyst which is an alkylaluminum compound, and a promoter which is a silicon compound containing an alkoxy group.

In the method for producing the (ultra)high molecular weight polyethylene-based block copolymer of the present invention, each step of the process may be included as follows:

(a) mixing and adding a co-catalyst (x) which is an alkylaluminum compound, a main catalyst (y) which is a titanium compound and a promoter (z) which is a silicon compound, in the presence of a hydrocarbon solvent containing 1 to 20 carbon atoms in a reactor;
(b) adding only ethylene monomers or both ethylene monomers and a trace amount of hydrogen to the mixed solution obtained in step (a) and performing a first-stage polymerization reaction;
(c) removing unreacted monomers in the reactor after the first-stage polymerization reaction;
(d) adding propylene monomers to the mixed solution obtained in step (c) and performing a second-stage polymerization reaction; and

(e) filtering and drying polyethylene-based block copolymer powder from the reaction solution obtained in step (d).

In the present invention, the (ultra)high molecular weight polyethylene-based block copolymer having (ultra)high molecular weight polyethylene as a first-stage polymer in a linear structure may be produced by sequentially adding ethylene monomers in step (b) and then adding propylene monomers in step (d). That is, in the (ultra)high molecular weight polyethylene-based block copolymer of the present invention, the (ultra)high molecular weight polyethylene produced through the first-stage polymerization reaction may form a starting polymer chain in a linear structure, and then the ultrahigh molecular weight polypropylene produced through the second-stage polymerization reaction may form a subsequent polymer chain that is linearly linked to the starting polymer chain.

Specifically, the (ultra)high molecular weight polyethylene may be a main chain forming the (ultra)high molecular weight polyethylene-based block copolymer of the present invention, and the ultrahigh molecular weight polypropylene may form a main chain consecutively to one main chain forming the (ultra)high molecular weight polyethylene-based block copolymer of the present invention.

As used herein, the term "main chain" refers to a stem molecular chain that forms the skeleton of a polymer, and means that the starting polymer chain and the subsequent polymer chains form one main chain. In the present invention, it is described that different polymers, which are (ultra)high molecular weight polyethylene and ultrahigh molecular weight polypropylene, form a block within the same main chain.

Furthermore, the block copolymer according to the present invention may be prepared through fourth-stage polymerization in which steps (b) to (d) are performed again after performing step (d). In this case, it is possible to obtain a block copolymer having uniform kneading properties and improved physical properties compared to the second-stage polymerization according to the present invention and a secondary battery separator fabricated using the block copolymer as a raw material.

The multi-stage polymerization of the (ultra)high molecular weight polyethylene-based block copolymer according to the present invention may be repeatedly performed in the range of 1 to 5 times, but is not limited thereto.

Here, step (a) is preferably performed under a nitrogen atmosphere. That is, step (a) is preferably performed in the presence of inert gas, but is not limited thereto.

In the method for producing the (ultra)high molecular weight polyethylene-based block copolymer of the present invention, the hydrocarbon solvent including 1 to 20 carbon atoms in step (a) may include at least any one solvent selected from the group consisting of aliphatic hydrocarbon solvents such as pentane, hexane, cyclohexane, methyl cyclohexane, heptane, octane, decane, undecane, dodecane, tridecane or tetradecane; aromatic hydrocarbon solvents such as benzene, toluene, xylene or ethyl benzene; and halogenated hydrocarbon solvents such as dichloropropane, dichloroethylene, trichloroethylene, carbon tetrachloride or chlorobenzene. In addition, the method may also be performed by gas phase polymerization or bulk polymerization under high pressure of propylene without hydrocarbons.

In step (a) of the method for producing the (ultra)high molecular weight polyethylene-based block copolymer of the present invention, representative examples of the co-catalyst (x) may include at least any one compound selected from the group consisting of triethylaluminum, trimethylaluminum, triisobutylaluminum, trioctylaluminum, diethylaluminum chloride, diethylaluminum bromide, diethylaluminum iodide, diethylaluminum fluoride, ethylaluminum dichloride, dimethylaluminum chloride, metalaluminum dichloride and ethylaluminum sesquichloride.

In step (a), the co-catalyst (x) is preferably added in an amount of 3 to 1000 moles per 1 mol of the main catalyst (y), but is not limited thereto. More specifically, it is preferable that Al in the co-catalyst (x), which is the alkylaluminum compound, is included in 3 to 1000 moles with respect to 1 mole of Ti in the main catalyst (y), which is the titanium compound, and it is more preferable that Al in the co-catalyst (x), which is the alkylaluminum compound, is included in 5 to 500 moles with respect to 1 mole of Ti in the main catalyst (y), which is the titanium compound. Furthermore, it is more preferable that Al in the co-catalyst (x), which is the alkylaluminum compound, is included in 10 to 500 moles with respect to 1 mole of Ti in the main catalyst (y), which is the titanium compound. For example, if Al in the co-catalyst (x), which is the alkylaluminum compound, is less than 5 moles with respect to 1 mole of Ti in the main catalyst (y), which is the titanium compound, there may be a problem in that the polymerization reaction does not sufficiently occur. On the contrary, if Al in the co-catalyst (x), which is the alkylaluminum compound, is more than 500 moles with respect to 1 mole of Ti in the main catalyst (y), which is the titanium compound, breakage of the molecular main chain is caused by the alkyl groups of the co-catalyst, thereby making it impossible to obtain a high molecular weight polyethylene resin and to obtain an (ultra)high molecular weight polyethylene-based block copolymer with a uniform kneading property and improved physical properties.

In addition, in step (a), the main catalyst (y) is a Ziegler-Natta-based titanium chloride catalyst containing a silicon compound containing phthalate, di-ether, and succinate as an internal electron donor, and magnesium chloride as a carrier, and suitably titanium trichloride, and a catalyst that provides high stereoregularity depending on a type of internal electron donor is more preferable, and generally, commercially available catalysts may be used.

In addition, in step (a), the promoter (z) may be used with any one or more compounds selected from the group

consisting of a compound of the following Chemical Formula (1), a compound of the following Chemical Formula (2), and a compound of the following Chemical Formula (3).

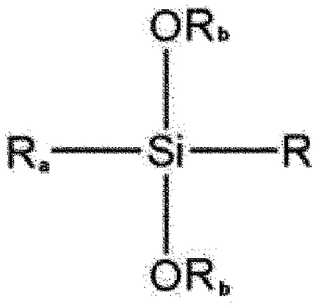

Chemical Formula (1)

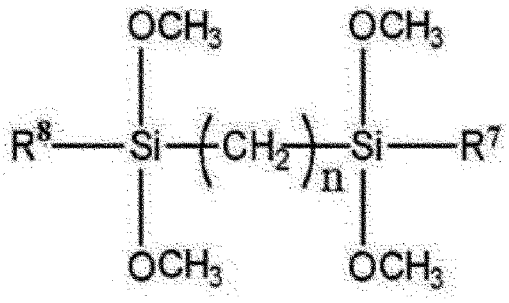

Chemical Formula (2)

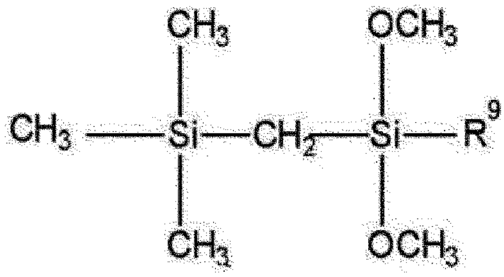

Chemical Formula (3)

In Chemical Formulas (1) to (3),

Ra, R7, R8 and R9 are each independently an alkyl group, cycloalkyl group, aryl group, allyl group or vinyl group having 1 to 12 carbon atoms, Rb is an alkyl group or aryl group having 1 to 6 carbon atoms, R is an alkyl group, cycloalkyl group, aryl group, or allyl group having 1 to 12 carbon atoms, or -ORc, in which Rc is an alkyl group or aryl group having 1 to 6 carbon atoms, and n is an integer of 0 to 6.

Specifically, representative examples of the compound of Chemical Formula (1) may include any one or more compounds selected from the group consisting of cyclohexylmethyldimethoxy silane (CMCD), cyclohexyl-n-propyldimethoxy silane (CPDM), cyclohexyl-i-propyldimethoxy silane (CIPDM), cyclohexyl-n-butyldimethoxy silane (CBDM), cyclohexyl-i-butyldimethoxy silane (CIBDM), cyclohexyl-n-hexyldimethoxy silane (CHDM), cyclohexyl-n-octyldimethoxy silane (CODM), cyclohexyl-n-decyldimethoxy silane (CDeDM), dimethyldimethoxy silane, dimethyldiethoxy silane, dicyclopentyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy silane, ethyltriethoxy silane, vinyltriethoxy silane, phenyltriethoxy silane, butyltriethoxy silane, ethyltriisopropoxy silane, vinyltributoxy silane, and methyltriaryloxy silane. Preferably, representative examples of the compound of Chemical Formula (1) may include any one or more compounds selected from the group consisting of dimethyldimethoxy silane, dimethyldiethoxy silane, dicyclopentyldimethoxy silane, cyclohexylmethyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy silane, ethyltriethoxy silane, vinyltrimethoxy silane, phenyltriethoxy silane, butyltriethoxy silane, ethyltriisopropoxy silane, vinyltributoxy silane, and methyltriaryloxy silane.

Representative examples of the compound of Chemical Formula (2) may include any one or more compounds selected from the group consisting of 1,1,3,3-tetramethoxy-1,3-dimethyl-1,3-disilapropane (TMDMDP), 1,1,3,3-tetramethoxy-1-methyl-3-hexyl-1,3-disilapropane (TMMHDP), 1,1,3,3-tetramethoxy-1,3-di-n-hexyl-1,3-disilapropane (TMDHDP), 1,1,3,3-tetramethoxy-1-methyl-3-cyclohexyl-1,3-disilapropane (TMMCDP), 1,1,3,3-tetramethoxy-1,3-dicyclohexyl-1,3-disilapropane (TMDCDP), 1,1,8,8-tetramethoxy-1,8-dicyclohexyl-1,8-disilaoctane (TMDCDO) and 1,1,3,3-tetramethoxy-1,3-dimethyldisiloxane (TMDMDS).

Representative examples of the compound of Chemical Formula (3) may include any one or more compounds selected from the group consisting of methyl(trimethylsilylmethyl)dimethoxysilane (MTDM), n-propyl(trimethylsilylmethyl)dimethoxysilane (PTDM), i-propyl(trimethylsilylmethyl)dimethoxysilane (IPTDM), n-butyl(trimethylsilylmethyl)dimethoxysilane (BTDM), i-butyl(trimethylsilylmethyl)dimethoxysilane (IBTDM), n-pentyl(trimethylsilylmethyl)dimethoxysilane (PnTDM), n-hexyl(trimethylsilylmethyl)dimethoxy silane (HTDM), cyclopentyl (trimethylsilylmethyl)dimethoxysilane (CpTDM), and cyclohexyl(trimethylsilyl methyl)dimethoxysilane (CTDM).

In step (a), the promoter (z) is preferably added in an amount of 0,5 to 40 moles per 1 mol of the main catalyst (y), but is not limited thereto. More specifically, it is preferable that Si in the promoter which is the silicon compound, is included in 0,5 to 40 moles with respect to 1 mole of Ti in the main catalyst which is the titanium compound, and it is more preferable that Si in the promoter which is the silicon compound, is included in 1 to 40 moles with respect to 1 mole of Ti in the main catalyst which is the titanium compound. Furthermore, it is more preferable that Si in the promoter which is the silicon compound, is included in 1 to 30 moles with respect to 1 mole of Ti in the main catalyst which is the titanium compound. For example, if Si in the promoter (z), which is the silicon compound, is less than 1 mole with respect to 1 mole of Ti in the main catalyst (y), which is the titanium compound, rapid and uneven particle growth blocks a catalytic active site due to a rapid reaction rate of ethylene in the first-stage polymerization reaction, and thus a sufficient polypropylene reaction does not occur in the second-stage polymerization reaction. On the contrary, if Si in the promoter which is the silicon compound, is more than 40 moles with respect to 1 mole of Ti in the main catalyst (b), which is the titanium compound, oxygen atoms contained in the promoter structure act as catalyst poison to cause a rapid decrease in activity, and due to the low degree of polymerization, an ultrahigh molecular weight polypropylene resin cannot be obtained, and even if polymerization occurs, there may be a problem in that it is impossible to obtain sufficiently an (ultra)high molecular weight polyethylene-based block copolymer with uniform kneading property and improved physical properties.

In the first-stage polymerization reaction of step (b), it is preferable to add 3 to 95 wt% of ethylene monomers, but it is not limited thereto. For example, when the ethylene monomers are added in an amount of less than 3 wt%, the ethylene content is low when producing the block copolymer, and a sufficient degree of polymerization is not secured, so that polymerization of high molecular weight polyethylene is not achieved. On the contrary, if the ethylene monomers are added in an amount of more than 95 wt%, it becomes difficult to control the composition of a target copolymer when producing the block copolymer, and the copolymer resin cannot be secured because the activity cannot be secured enough to proceed with the polypropylene reaction in the second stage.

Meanwhile, in step (b), only the ethylene monomers or both the ethylene monomers and a trace amount of hydrogen are added to the mixed solution, and the polymerization temperature at which the first-stage polymerization reaction is performed is preferably within the range of 30 to 90°C, but is not limited thereto. For example, if the polymerization temperature at which the polymerization reaction is performed is less than 30°C, there may be a problem in that the polymerization reaction does not sufficiently occur. On the contrary, if the polymerization temperature at which the polymerization reaction is performed is more than 90°C, even if the polymerization reaction occurs, due to the rapid reaction speed, the produced resin rapidly blocks the catalytic active site, so that it is difficult to control the composition of the target copolymer, and sufficient activity for second-stage polymerization cannot be secured.

In addition, in step (b), only the ethylene monomers or both the ethylene monomers and a trace amount of hydrogen are added to the mixed solution, and the polymerization pressure at which the first-stage polymerization reaction is performed is preferably within the range of 1 to 40 bar, but is not limited thereto. For example, if the polymerization pressure at which the polymerization reaction is performed is less than 1 bar, there may be a problem in that the polymerization reaction does not sufficiently occur. On the contrary, if the polymerization pressure at which the polymerization reaction is performed is more than 40 bar, even if the polymerization reaction occurs, due to the rapid reaction speed, the produced resin rapidly blocks the catalytic active site, so that it is difficult to control the composition of the target copolymer, and sufficient activity for second-stage polymerization cannot be secured.

In addition, in the first-stage polymerization reaction in step (b), the molecular weight range of the target ultrahigh molecular weight polyethylene polymer may be controlled by adding ethylene monomers to the mixed solution and adding or not a trace amount of hydrogen (H2) as a molecular weight regulator. At this time, the hydrogen content added to the first-stage polymerization reaction is within the range of 0,001 to 500 ml under the reactor condition of 1 atm pressure, or supplied at a pressure of 0,001 to 0,5 bar, or the hydrogen molar content to the olefin monomer may be supplied in the range of 0,1 to 50 vol%, but is not limited thereto.

Step (c) corresponds to a process of removing unreacted monomers remaining in the reactor after the first-stage polymerization reaction. Here, the unreacted monomer is preferably an ethylene monomer, and if propylene monomers are first added instead of the ethylene monomers in step (b), the unreacted monomer may be a propylene monomer. A vacuum pump may be used to effectively remove unreacted monomers, but since hexane in the reactor may be vaporized and removed, the vacuum level is limited to 30 torr, or the internal temperature of the reactor is maintained above 60°C, and nitrogen is filled up to 2 bar, and the method of completely discharging it into the atmosphere is performed three times or more.

In the second-stage polymerization reaction of step (d), it is preferable to add 6 to 98 wt% of propylene monomers in the entire added monomers, but it is not limited thereto. For example, if the propylene monomers are added in an amount of less than 6 wt%, the propylene content is low during the production of the block copolymer, and when confirming the melting point of the block copolymer, a melting point corresponding to polypropylene of 160°C or higher cannot be expressed. On the contrary, if the propylene monomers are added in more than 98 wt%, it may become difficult to control the composition of the target copolymer when producing the block copolymer, and there may be a problem in that performance of the separator deteriorates when producing a secondary battery separator using the copolymer as a raw material.

Meanwhile, in step (d), the polymerization temperature at which the propylene monomers are added to the mixed solution and the second-stage polymerization reaction is performed is preferably within the range of 30 to 90°C, but is not limited thereto. For example, if the polymerization temperature at which the polymerization reaction is performed is less than 30°C, there may be a problem in that the polymerization reaction does not sufficiently occur. On the contrary, if the polymerization temperature at which the polymerization reaction is performed is more than 90°C, even if the polymerization reaction occurs, polypropylene with low stereoregularity is polymerized and dissolved in hexane, or the polymerization activity decreases rapidly, so that it is difficult to control the composition of the target copolymer, and there may be a problem in that the performance of the separator deteriorates when fabricating a secondary battery separator using the copolymer as a raw material.

In addition, in step (d), the polymerization pressure at which the propylene monomers are added to the mixed solution and the second-stage polymerization reaction is performed is preferably within the range of 1 to 40 bar, but is not limited thereto. For example, if the polymerization pressure at which the polymerization reaction is performed is less than 1 bar, there may be a problem in that the polymerization reaction does not sufficiently occur. On the contrary, if the polymerization pressure at which the polymerization reaction is performed is more than 40 bar, even if the polymerization reaction occurs, it is difficult to control the composition of the target copolymer, and there may be a problem in that the performance of the separator deteriorates when fabricating a secondary battery separator using the copolymer as a raw material.

In addition, when the propylene monomers are added to the mixed solution in the second-stage polymerization reaction in step (d) and hydrogen ($H_2$) as a molecular weight regulator is added, ultrahigh molecular weight polypropylene cannot be polymerized. In this case, in order to control the molecular weight range, the ratio of the main catalyst, the co-catalyst, and the promoter is controlled to control the molecular weight range of the target ultrahigh molecular weight polypropylene polymer and the molecular weight range of the final produced ultrahigh molecular weight polyethylene-based block copolymer.

Meanwhile, the polymerization reaction performed in steps (b) and (d) may be performed in liquid phase, slurry phase, bulk phase, or gas phase polymerization, but is not limited thereto. Preferably, steps (b) and (d) are preferably performed in a suspension polymerization reactor (autoclave), and may be performed in two or more consecutive reactors. In this case, the physical properties of the polymer may be controlled by making the operating conditions of each reactor the same or different.

Step (e) is a step of filtering and drying polyethylene-based block copolymer powder from the reaction solution obtained in step (d). More specifically, step (e) is performed by mixing a polar organic solvent with the (ultra)high molecular weight polyethylene-based block copolymer produced above, and performing separating, purifying and drying using distilled water (y) or filtered water (y').

At this time, in the mixing ratio of the produced (ultra)high molecular weight polyethylene-based block copolymer and the polar organic solvent, the polar organic solvent may be added and mixed 0,1 to 10 times higher than the weight of the produced block copolymer, and preferably 0,5 to 3 times higher than the weight of the prepared block copolymer.

That is, it is preferable to mix 10 to 1000 parts by weight of the polar organic solvent with respect to 100 parts by weight of the produced block copolymer, and it is more preferable to mix 50 to 300 parts by weight of the polar organic solvent with respect to 100 parts by weight of the produced block copolymer.

At this time, the polar organic solvent may be a compound of the following Chemical Formula (4).

R-OH Chemical Formula (4)

HO-R1-R2-OH Chemical Formula (5)

In the Chemical Formula (4), R is a linear or branched alkyl group having 1 to 12 carbon atoms. Specifically, representative examples of the compound corresponding to Chemical Formula (4) may include one or more compounds selected from the group consisting of linear alkyl groups such as methanol, ethanol, propanol, butanol, pentanol, hexanol, heptanol, octanol, nonanol, decanol, undecanol, and dodecanol, and branched alkyl groups such as isopropanol, isobutanol, and isopentanol.

In the Chemical Formula (5), R1 and R2 are linear alkyl groups having 0 to 6 carbon atoms. Specifically, representative examples of the compound corresponding to Chemical Formula (5) may include one or more compounds selected from the group consisting of methanediol, ethanediol, propanediol, butanediol, pentanediol, hexanediol, heptanediol, octanediol, nonanediol, decanediol, undecanediol, and dodecanediol.

The water used to separate the polar organic solvent in which the catalyst residues are dissolved, from the produced block copolymer may be distilled water or filtered water, and may be used in an amount of 1 to 30 times greater than the weight of the used polar organic solvent, preferably 5 to 20 times greater than the weight of the polar organic solvent.

That is, it is preferred to use 100 to 3000 parts by weight of distilled water or filtered water based on 100 parts by weight of the polar organic solvent, and it is more preferred to use 500 to 2000 parts by weight of distilled water or filtered water based on 100 parts by weight of the polar organic solvent. The mixed material of the produced block copolymer and the polar organic solvent is in contact with water and then layer-separated. Here, the molecular polar organic solvent is mixed into a water layer, and the produced block copolymer floats in the upper layer of water, the floating matter may be separated using filter paper or a filter, and then dried in a dryer at 90 to 105°C to obtain an (ultra)high molecular weight polyethylene-based block copolymer from which inorganic materials such as magnesium, titanium, aluminum, and silicon, which have been used as catalysts in the polymerization process, have been removed.

## (Ultra)high molecular weight polyethylene-based block copolymer

Meanwhile, the present specification further discloses an (ultra)high molecular weight polyethylene-based block copolymer produced by the method for producing the (ultra) high molecular weight polyethylene-based block copolymer of the present invention.

In the (ultra)high molecular weight polyethylene-based block copolymer of the present invention, the content of the (ultra)high molecular weight polyethylene is preferably 5 to 95 wt%, and the content of the ultrahigh molecular weight polypropylene is preferably 5 to 95 wt%, but are not limited thereto.

In addition, in the (ultra)high molecular weight polyethylene-based block copolymer of the present invention, the viscosity average molecular weight of the (ultra)high molecular weight polyethylene is preferably 400,000 to 5,000,000 g/mol, and more preferably 800,000 to 4,000,000 g/mol.

In addition, in the (ultra)high molecular weight polyethylene-based block copolymer of the present invention, the viscosity average molecular weight of the ultrahigh molecular weight polypropylene is preferably 1,000,000 to 4,000,000 g/mol, and more preferably 1,200,000 to 3,000,000 g/mol.

Furthermore, the (ultra)high molecular weight polyethylene-based block copolymer of the present invention has a viscosity average molecular weight of preferably 400,000 to 5,000,000 g/mol and more preferably 900,000 to 4,000,000 g/mol under conditions in which hydrogen is not added or a trace amount thereof is added, preferably under conditions in which hydrogen is not added.

In addition, the (ultra)high molecular weight polyethylene-based block copolymer of the present invention is produced by performing a first-stage polymerization reaction in which only the ethylene monomers are added to the mixed solution or both the ethylene monomers and a trace amount of hydrogen are added, and then performing a second-stage polymerization reaction in which propylene monomers are added to the mixed solution to have the (ultra)high molecular weight polyethylene as a first-stage polymer in a linear structure.

In addition, in the (ultra)high molecular weight polyethylene-based block copolymer of the present invention, an inorganic content may be maintained at a level of 30 ppm or less through the catalyst residue removal process as described above. More specifically, the inorganic content of the (ultra)high molecular weight polyethylene-based block copolymer according to the present invention is preferably 1 to 30 ppm, and more preferably 5 to 20 ppm.

In addition, in the (ultra)high molecular weight polyethylene-based block copolymer of the present invention, a particle diameter may be maintained at a level of 400 μm or less by controlling the particle diameter and the degree of polymerization of the catalyst as described above. More specifically, the particle diameter of the (ultra)high molecular weight polyethylene-based block copolymer according to the present invention is preferably 10 to 400 μm, and more preferably 50 to 300 μm.

In addition, the (ultra)high molecular weight polyethylene-based block copolymer of the present invention preferably has an apparent density of 0,30 to 0,50 g/cm$^3$, but is not limited thereto.

**Secondary battery separator fabricated using (ultra)high molecular weight polyethylene-based block copolymer as raw material**

In addition, the (ultra)high molecular weight polyethylene-based block copolymer according to the present invention has an increased kneading property compared to a conventional copolymer of polyethylene and polypropylene to fabricate a secondary battery separator with excellent performance using the block copolymer of the present invention as a raw material.

The secondary battery separator fabricated using the (ultra)high molecular weight polyethylene-based block copolymer according to the present invention as the raw material preferably has a puncture strength of 300 to 600 gf, but is not limited thereto.

In addition, the secondary battery separator fabricated using the (ultra)high molecular weight polyethylene-based block copolymer according to the present invention as the raw material preferably has a tensile strength of 800 to 2000 $kgf/cm^2$, but is not limited thereto.

In addition, the secondary battery separator fabricated using the (ultra)high molecular weight polyethylene-based block copolymer according to the present invention as the raw material preferably has an elongation (Elong) of 25 to 90%, but is not limited thereto.

**Mode for Implementation of the Invention**

Hereinafter, the present specification to be claimed will be described in more detail with reference to the accompanying drawings and examples. However, the drawings, examples, etc. presented in the present specification can be modified in various ways by those skilled in the art to have various forms, and it should be understood that the description in the present specification does not limit the present invention to a specific disclosed form and includes all equivalents or substitutes included in the spirit and technical scope of the present invention. In addition, the accompanying drawings are presented to help those skilled in the art understand the present invention more accurately, and may be exaggerated or reduced compared to reality.

{Embodiments and Evaluation}

Embodiment 1.

A 2 L stainless steel reactor equipped with a stirrer was vacuumed at room temperature, injected with 900 ml of hexane as an organic solvent, and then stirred. At room temperature, 900 mg of triethylaluminum as a co-catalyst and 90 mg of dicyclopentyldimethoxy silane as a promoter were added, and 30 mg of a titanium compound catalyst as a main catalyst was added. Thereafter, the reactor was placed in a thermostat maintained at 70°C and the temperature was raised to 60°C.

a. First-stage polymerization
200 ml of hydrogen as a molecular weight regulator was added, and then gaseous ethylene monomers were added at a rate of 1050 ml/min for 85 minutes using a mass flow meter and polymerized at 70°C.
b. Remove unreacted ethylene monomers.
c. The unreacted ethylene monomers were removed, and then gaseous propylene monomers were added at a rate of 500 ml/min for 120 minutes using a mass flow meter without adding hydrogen, and polymerized at 70°C. After completion of the reaction, unreacted propylene monomers were removed, the reactor was opened, the organic solvent and the polymerized resin were filtered and separated, and the resin was dried in a dryer to obtain an (ultra)high molecular weight polyethylene-based block copolymer resin.

Embodiment 2.

Embodiment 2 was performed in the same manner as Embodiment 1 except for controlling the added amount of gaseous ethylene to 500 ml/min after adding 100 ml of hydrogen gas during a. first-stage polymerization and the added amount of gaseous propylene in c. second-stage polymerization to 750 ml/min.

Embodiment 3.

Embodiment 3 was performed in the same manner as Embodiment 1 except for adding the added amount of gaseous ethylene at 1100 ml/min for 120 minutes after adding 300 ml of hydrogen gas during a. first-stage polymerization and adding the added amount of gaseous propylene in c. second-stage polymerization at 500 ml/min for 60 minutes.

Embodiment 4.

Embodiment 4 was performed in the same manner as Embodiment 1 except for adding the added amount of gaseous ethylene at 300 ml/min for 30 minutes after adding 20 ml of hydrogen gas during a. first-stage polymerization and adding the added amount of gaseous propylene in c. second-stage polymerization at 730 ml/min for 150 minutes.

Embodiment 5.

Embodiment 5 was performed in the same manner as Embodiment 1 except for adding the added amount of gaseous ethylene at 1400 ml/min for 120 minutes after adding 380 ml of hydrogen gas during a. first-stage polymerization and adding the added amount of gaseous propylene in c. second-stage polymerization at 200 ml/min for 30 minutes.

Embodiment 6.

Embodiment 6 was performed in the same manner as Embodiment 1 except for not adding hydrogen during a. first-stage polymerization.

Embodiment 7.

Embodiment 7 was performed in the same manner as Embodiment 1 except for adding no hydrogen during a. first-stage polymerization and controlling the second-stage polymerization reaction temperature to 55°C.

Embodiment 8.

Embodiment 8 was performed in the same manner as in Embodiment 1 except for adding the added amount of gaseous ethylene in a. first-stage polymerization at 700 ml/min for 60 minutes after the step of preparing the polymerization, adding the added amount of gaseous propylene in c. second-stage polymerization at 500 ml/min for 60 minutes, and then repeating the first and second-stage polymerization to perform fourth-stage polymerization.

Embodiment 9.

Embodiment 9 was performed in the same manner as Embodiment 1 except for that the co-catalyst was reduced from 900 mg to 300 mg and the co-catalyst was reduced from 90 mg to 30 mg.

Embodiment 10.

Embodiment 10 was performed in the same manner as Embodiment 1 except for that the co-catalyst was reduced from 900 mg to 300 mg.

Embodiment 11.

Embodiment 11 was performed in the same manner as Embodiment 6 except for that the polymerization temperature of the first and second stage polymerizations was reduced from 70°C to 30°C.

Comparative Example 1.

VH035 (viscosity average molecular weight: 400,000) and UHMWPP (viscosity average molecular weight: 1,500,000) from Korea Petrochemical Ind. Co., LTD. were mixed in a 50 : 50 ratio.

Comparative Example 2.

U015 (viscosity average molecular weight: 1,500,000) and UHMWPP (viscosity average molecular weight: 1,500,000) from Korea Petrochemical Ind. Co., LTD. were mixed in a 50 : 50 ratio.

Comparative Example 3.

VH100U (viscosity average molecular weight: 1,000,000) and UHMWPP (viscosity average molecular weight: 1,500,000) from Korea Petrochemical Ind. Co., LTD. were mixed in a 45 : 55 ratio.

Comparative Example 4.

VH100U (viscosity average molecular weight: 1,000,000) and UHMWPP (viscosity average molecular weight: 1,500,000) from Korea Petrochemical Ind. Co., LTD. were mixed in a 40 : 60 ratio.

Comparative Example 5.

Comparative Example 5 was performed in the same manner as Embodiment 1 except for that the co-catalyst was reduced from 900 mg to 10 mg and the co-catalyst was reduced from 90 mg to 30 mg.

Comparative Example 6.

Comparative Example 6 was performed in the same manner as Embodiment 1 except for that the co-catalyst was increased from 900 mg to 1730 mg.

Comparative Example 7.

Comparative Example 7 was performed in the same manner as Embodiment 1 except for that the promoter was reduced from 90 mg to 3 mg.

Comparative Example 8.

Comparative Example 8 was in the same manner as Embodiment 1 except for that the promoter was increased from 90 mg to 130 mg.

Method for measuring physical properties of ultrahigh molecular weight polyethylene-based block copolymer

(1) Viscosity average molecular weight (Mv): A viscosity average molecular weight was measured by securing the intrinsic viscosity using an intrinsic viscosity measurement method defined by ASTM D-5020 and ISO 1628-3, and expressing the converted value using the Margolies Equation.

$$Mv = 5.37 \times 10^4 \text{ x } [\eta]^{1.49}$$

$\eta$: Intrinsic viscosity
(2) Polyethylene/polypropylene content: The values analyzed by NMR $C^{13}$ were integrated and expressed.
(3) Apparent density ($g/cm^3$): After removing the moisture from block copolymer resin powder, the apparent density was measured using a dry automatic density meter (AccuPycll 1340TC-10CC; product manufactured by Shimadzu Corporation/carrier gas; helium). The measurement was repeated until the measured values were consecutively the same five or more times.

Method for measuring physical properties of secondary battery separator

(1) Puncture strength (gf): A puncture test was conducted under the conditions of a radius of curvature of the tip of the needle of 0.5 mm and a puncture speed of 2 mm/sec using a KES-G5 handy compression tester manufactured by Catotec, and the maximum puncture load was set as the puncture strength. Here, a sample was fixed to a gold frame (sample holder) punctured with holes having a diameter of 11,3 mm, along with a silicone rubber packing.
(2) Tensile strength ($kgf/cm^2$): The tensile strength of a secondary battery separator was measured based on ASTM D882 (1997). In addition, an Instron-type tensile tester was used, and the conditions were as follows. The average value of the five-time measurement results was set as the tensile strength in the present invention. The specimen for measuring the tensile strength was used with a secondary battery separator cut into a rectangular shape with a length of 10 mm and a width of 50 mm. The tensile speed was 100 mm/min, and the measurement environment was a temperature of 23°C and a humidity of 65% RH. (3) Elongation (Elong.%): 1/2 of a No. 2 specimen of JISK7113 stamped from a 1 mm-thick press sheet was used as an evaluation sample, and the test was conducted at a tensile

speed of 30 mm/min in an atmosphere of 23°C. For the measurement, AGS-50G manufactured by Shimadzu Corporation was used.

Measurement results of physical properties of ultrahigh molecular weight polyethylene-based block copolymer

The evaluation results were shown in Table 1 below for the contents of polyethylene and polypropylene in the block copolymers produced according to Embodiments 1 to 11 and Comparative Examples 1 to 8, the viscosity average molecular weights after each first to fourth-stage polymerization, and the characteristics of the secondary battery separators.

Table 1

| Classification | Ti (mmol) | Al (mmol) | Si (mmol) | ethylene (ml/mi n) | first-stage (third-stage) polymenzation time (min) | propylene (ml/min) | second-stage (fourth-stage) polymerization time (min) | polymerization temperature (first-stage/ second-stage , °C) | hydrogen (ml) | poly ethylene (%) | poly propylene (%) | Apparent density (g/cm$^3$) | Mv (g/mol) | Secondary battery separator | | |
|---|---|---|---|---|---|---|---|---|---|---|---|---|---|---|---|---|
| | | | | | | | | | | | | | | Puncture strength (gf) | Tensile strength (kgf/cm$^2$) | Elong. (%) |
| Embodiment 1 | 0.016 | 7.88 | 0.39 | 1,050 | 85 | 500 | 120 | 70/70 | 200 | 50.5 | 49.5 | 0.43 | 1,050,000 | 363 | 1,049 | 45 |
| Embodiment 2 | 0.016 | 7.88 | 0.39 | 500 | 85 | 750 | 120 | 70/70 | 100 | 24.8 | 75.2 | 0.42 | 1,274,000 | 531 | 1,705 | 52 |
| Embodiment 3 | 0.016 | 7.88 | 0.39 | 1,100 | 120 | 500 | 60 | 70/70 | 300 | 76.1 | 23.9 | 0.41 | 828,000 | 87 | 987 | 38 |
| Embodiment 4 | 0.016 | 7.88 | 0.39 | 300 | 30 | 730 | 150 | 70/70 | 20 | 4.9 | 95.1 | 0.46 | 1,476,000 | 367 | 1,143 | 62 |
| Embodiment 5 | 0.016 | 7.88 | 0.39 | 1,400 | 120 | 200 | 30 | 70/70 | 380 | 94.8 | 5.2 | 0.39 | 647,000 | 38 | 238 | 27 |
| Embodiment 6 | 0.016 | 7.88 | 0.39 | 1,050 | 85 | 500 | 120 | 70/70 | 0 | 51.3 | 48.7 | 0.42 | 1,050,000 | 481 | 1,511 | 53 |
| Embodiment 7 | 0.016 | 7.88 | 0.39 | 1,050 | 85 | 500 | 120 | 70/55 | 0 | 53.0 | 47.0 | 0.40 | 2,060,000 | 472 | 1,409 | 76 |
| Embodiment 8 | 0.016 | 7.88 | 0.39 | 700 | (60 (60) | 500 | 60 (60) | 70/70 | 0 | 50.3 | 49.7 | 0.41 | 1,634,000 | 559 | 1,811 | 81 |
| Embodiment 9 | 0.016 | 2.63 | 0.13 | 1,050 | 85 | 500 | 120 | 70/70 | 200 | 70.3 | 29.7 | 0.38 | 1,320,000 | 382 | 1,325 | 63 |
| Embodiment 10 | 0.016 | 2.63 | 0.39 | 1,050 | 85 | 500 | 120 | 70/70 | 200 | 76.1 | 23.9 | 0.39 | 1,830,000 | 331 | 1,287 | 83 |
| Embodiment 11 | 0.016 | 7.88 | 0.39 | 1,050 | 85 | 500 | 120 | 30/30 | 0 | 52.3 | 47.7 | 0.36 | 2,320,000 | 513 | 1,589 | 78 |
| Comparative Example 1 | - | - | - | - | - | - | - | < | - | 50 | 50 | 0.45 | 950,000 | 139 | 365 | 51 |

(continued)

| Classification | Ti (mmol) | Al (mmol) | Si (mmol) | ethylene (ml/mi n) | first-stage (third-stage) polymenzation time (min) | propylene (ml/min) | second-stage (fourth-stage) polymerization time (min) | polymerization temperature (first-stage/ second-stage , °C) | hydrogen (ml) | poly ethylene (%) | poly propylene (%) | Apparent density ($g/cm^3$) | Mv (g/mol) | Secondary battery separator | | |
|---|---|---|---|---|---|---|---|---|---|---|---|---|---|---|---|---|
| | | | | | | | | | | | | | | Puncture strength (gf) | Tensile strength ($kgf/cm^2$) | Elong. (%) |
| Comparative Example 2 | - | - | - | - | - | - | - | - | - | 50 | 50 | 0.44 | 1,740,000 | 158 | 383 | 47 |
| Comparative Example 3 | - | - | - | - | - | - | - | - | - | 45 | 55 | 0.43 | 1,725,000 | 214 | 577 | 55 |
| Comparative Example 4 | - | - | - | - | - | - | - | - | - | 40 | 60 | 0.44 | 1,700,000 | 230 | 547 | 45 |
| Comparative Example 5 | 0.016 | 0.09 | 0.13 | 1,050 | 85 | 500 | 120 | 70/70 | 200 | 99.1 | 0.9 | 0.18 | 80,000 | - | - | - |
| Comparative Example 6 | 0.016 | 15.1 | 0.39 | 1,050 | 85 | 500 | 120 | 70/70 | 200 | 53.0 | 47.0 | 0.22 | 684,000 | - | - | - |
| Comparative Example 7 | 0.016 | 7.88 | 0.013 | 1,050 | 85 | 500 | 120 | 70/70 | 200 | 98.3 | 1.7 | 0.16 | 1,240,000 | - | - | - |
| Comparative Example 8 | 0.016 | 7.88 | 0.56 | 1,050 | 85 | 500 | 120 | 70/70 | 200 | 82.1 | 17.9 | 0.19 | 834,000 | - | - | - |

Referring to Table 1, the characteristics of the secondary battery separator may be confirmed according to the contents and molecular weights of polyethylene and polypropylene in the ultrahigh molecular weight polyethylene-based block copolymer according to an embodiment of the present invention, and improvements in physical properties and surface were confirmed compared to a simple mixed heterogeneous composite resin of Comparative Example.

It can be confirmed that the (ultra)high molecular weight polyethylene-based block copolymer of the present invention according to Embodiments 1 to 11 includes 10 to 500 moles of Al in the co-catalyst which is the alkylaluminum compound, and 10 to 40 moles of Si in the promoter which is the silicon compound, with respect to 1 mole of Ti in the main catalyst which is the titanium compound, and has a viscosity average molecular weight of 400,000 to 5,000,000 g/mol under the conditions that hydrogen ($H_2$) as a molecular weight regulator is added in a trace amount or not added.

In addition, from Embodiments 6 and 11, it can be confirmed that when the polymerization temperature was 30 to 90°C when producing the (ultra)high molecular weight polyethylene-based block copolymer of the present invention, it is possible to produce an (ultra)high molecular weight polyethylene-based block copolymer having a viscosity average molecular weight of 400,000 to 5,000,000 g/mol.

In addition, it can be confirmed that the (ultra)high molecular weight polyethylene-based block copolymers of the present invention according to Embodiments 1 to 11 have an apparent density of 0,30 to 0,50 g/cm$^3$.

On the other hand, it can be confirmed that the block copolymers of polyethylene and polypropylene according to Comparative Examples 5 to 8 all have an apparent density of less than 0,30 g/cm$^3$.

Furthermore, it can be confirmed that the secondary battery separators fabricated using the (ultra)high molecular weight polyethylene-based block copolymers of the present invention according to Embodiments 1 to 11 as a raw material have the puncture strength of 300 to 600 gf, thereby exhibiting improved mechanical properties compared to the secondary battery separators fabricated using the block copolymers according to Comparative Examples 1 to 4 as a raw material.

On the other hand, it can be confirmed that the secondary battery separators fabricated using the block copolymers of polyethylene and polypropylene according to Comparative Examples 1 to 4 as the raw material all have puncture strengths of less than 300 gf.

In addition, it can be confirmed that the secondary battery separators fabricated using the (ultra)high molecular weight polyethylene-based block copolymers of the present invention according to Embodiments 1 to 10 as the raw material have a tensile strength of 800 to 2000 kgf/cm$^2$ and an elongation (Elong) of 25 to 90%, which have uniform kneading properties and improved physical properties compared to the secondary battery separators fabricated using the block copolymers according to Comparative Examples 1 to 4 as the raw material.

On the other hand, it can be confirmed that the secondary battery separators fabricated using the block copolymers of polyethylene and polypropylene according to Comparative Examples 1 to 4 as the raw material have the tensile strength and the elongation (Elong) of less than 600 kgf/cm$^2$ and less than 60%, respectively.

In particular, it can be seen that the secondary battery separator fabricated using the (ultra)high molecular weight polyethylene-based block copolymer of the present invention according to Embodiment 8 has a puncture strength of 559 gf, a tensile strength of 1811 kgf/cm$^2$, and an elongation (Elong) of 81%, which have the best kneading property and improved physical properties as the secondary battery separator.

From this, it can be confirmed that compared to second-stage polymerization in which ethylene monomers and propylene monomers are added once and polymerized, in the case of performing fourth-stage polymerization of adding and polymerizing ethylene monomers and propylene monomers once, and then additionally adding and polymerizing the ethylene monomers and propylene monomers again, the kneading properties and mechanical properties of the produced block copolymer and the secondary battery separator fabricated using the block copolymer as the raw material are improved.

According to the (ultra)high molecular weight polyethylene-based block copolymer of the present invention as described above, there is an effect of improving kneading property, film surface, and other physical properties, compared to a secondary battery separator processed by simply mixing heterogeneous composite materials of polyethylene and polypropylene, as well as application as a compatibilizer for increasing a kneading property when mixing and processing polyethylene and polypropylene with low compatibility.

The above description just illustrates the technical spirit of the present invention and various changes and modifications can be made by those skilled in the art to which the present invention pertains without departing from an essential characteristic of the present invention.

Therefore, the embodiments disclosed in the present invention are intended not to limit the technical spirit of the present invention but to describe the present invention and the scope of the technical spirit of the present invention is not limited by these embodiments. The protective scope of the present invention should be construed on the basis of the appended claims, and all the technical ideas in the equivalent scope thereof should be construed as falling within the scope of the present invention.

**Industrial Applicability**

According to the present invention, it is possible to provide a secondary battery separator with improved kneading properties, film surface, and other physical properties, compared to a secondary battery separator processed by simply mixing heterogeneous composite materials of polyethylene and polypropylene, as well as application as a compatibilizer for increasing a kneading property when mixing and processing polyethylene and polypropylene with low compatibility.

**Claims**

1. A method for producing an (ultra)high molecular weight polyethylene-based block copolymer comprising:

   (a) mixing and adding a co-catalyst (x), which is an alkylaluminum compound, a main catalyst (y) which is a titanium compound and a promoter (z) which is a silicon compound in a presence of a hydrocarbon solvent containing 1 to 20 carbon atoms in a reactor;
   (b) adding only an ethylene monomer or both an ethylene monomer and a trace amount of hydrogen to a mixed solution obtained in step (a) and performing a first-stage polymerization reaction;
   (c) removing unreacted monomers in the reactor after the first-stage polymerization reaction;
   (d) adding propylene monomers to the mixed solution obtained in step (c) and performing a second-stage polymerization reaction; and
   (e) filtering and drying polyethylene-polypropylene block copolymer powder from the reaction solution obtained in step (d).

2. The method for producing the (ultra)high molecular weight polyethylene-based block copolymer of claim 1, wherein the co-catalyst (x) is at least any one compound selected from a group consisting of triethylaluminum, trimethylaluminum, triisobutylaluminum, trioctylaluminum, diethylaluminum chloride, diethylaluminum bromide, diethylaluminum iodide, diethylaluminum fluoride, ethylaluminum dichloride, dimethylaluminum chloride, metalaluminum dichloride and ethylaluminum sesquichloride.

3. The method for producing the (ultra)high molecular weight polyethylene-based block copolymer of claim 1, wherein the promoter (z) is at least any one compound selected from a group consisting of cyclohexylmethyldimethoxy silane (CMCD), cyclohexyl-n-propyldimethoxy silane (CPDM), cyclohexyl-i-propyldimethoxy silane (CIPDM), cyclohexyl-n-butyldimethoxy silane (CBDM), cyclohexyl-i-butyldimethoxy silane (CIBDM), cyclohexyl-n-hexyldimethoxy silane (CHDM), cyclohexyl-n-octyldimethoxy silane (CODM), cyclohexyl-n-decyldimethoxy silane (CDeDM), dimethyldimethoxy silane, dimethyldiethoxy silane, dicyclopentyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy silane, ethyltriethoxy silane, vinyltriethoxy silane, phenyltriethoxy silane, butyltriethoxy silane, ethyltriisopropoxy silane, vinyltributoxy silane, and methyltriaryloxy silane.

4. The method for producing the (ultra)high molecular weight polyethylene-based block copolymer of claim 1, wherein Al in the co-catalyst (x), which is the alkylaluminum compound, is included in 10 to 500 moles with respect to 1 mole of Ti in the main catalyst (y), which is the titanium compound.

5. The method for producing the (ultra)high molecular weight polyethylene-based block copolymer of claim 1, wherein Si in the promoter (z), which is the silicon compound, is included in 1 to 40 moles with respect to 1 mole of Ti in the main catalyst (y), which is the titanium compound.

6. The method for producing the (ultra)high molecular weight polyethylene-based block copolymer of claim 1, wherein a polymerization temperature in the first and second-stage polymerization reactions is 30 to 90°C.

7. The method for producing the (ultra)high molecular weight polyethylene-based block copolymer of claim 1, wherein a polymerization pressure in the first and second-stage polymerization reactions is 1 to 40 bar.

8. The method for producing the (ultra)high molecular weight polyethylene-based block copolymer of claim 1, wherein in the first-stage polymerization reaction, 3 to 95 wt% of the ethylene monomers are added, and in the second-stage polymerization reaction, 6 to 98 wt% of the propylene monomers are added.

9. An (ultra)high molecular weight polyethylene-based block copolymer comprising:

25 to 90 wt% of (ultra) high molecular weight polyethylene; and 10 to 75 wt% of ultrahigh molecular weight polypropylene with respect to 100 wt% of the block copolymer,
wherein the (ultra)high molecular weight polyethylene has a viscosity average molecular weight of 400,000 to 5,000,000 g/mol, and the ultrahigh molecular weight polypropylene has the viscosity average molecular weight of 1,000,000 to 4,000,000 g/mol, and
the block copolymer has the viscosity average molecular weight of 400,000 to 5,000,000 g/mol under conditions of adding no hydrogen or adding a trace amount of hydrogen.

10. The (ultra)high molecular weight polyethylene-based block copolymer of claim 9, wherein the block copolymer is produced by performing a first-stage polymerization reaction in which only ethylene monomers are added to a mixed solution or both the ethylene monomers and a trace amount of hydrogen are added, and then performing a second-stage polymerization reaction in which propylene monomers are added to the mixed solution to have the (ultra)high molecular weight polyethylene as a first-stage polymer in a linear structure.

11. The (ultra)high molecular weight polyethylene-based block copolymer of claim 9, wherein the block copolymer has an apparent density of 0,30 to 0,50 g/cm$^3$.

12. The (ultra)high molecular weight polyethylene-based block copolymer of claim 9, wherein the block copolymer has an inorganic content of 1 to 30 ppm, and the inorganic material is used as a catalyst in a polymerization process.

13. The (ultra)high molecular weight polyethylene-based block copolymer of claim 9, wherein the block copolymer has a particle diameter of 10 to 400 $\mu$m.

14. A secondary battery separator fabricated using an (ultra)high molecular weight polyethylene-based block copolymer as a raw material, wherein
the (ultra)high molecular weight polyethylene-based block copolymer includes 25 to 90 wt% of (ultra)high molecular weight polyethylene; and 10 to 75 wt% of ultrahigh molecular weight polypropylene based on 100 wt% of the block copolymer, wherein the (ultra)high molecular weight polyethylene has a viscosity average molecular weight of 400,000 to 5,000,000 g/mol, the ultrahigh molecular weight polypropylene has the viscosity average molecular weight of 1,000,000 to 4,000,000 g/mol, and the block copolymer has the viscosity average molecular weight of 400,000 to 5,000,000 g/mol under conditions of adding no hydrogen or adding a trace amount of hydrogen.

15. The secondary battery separator of claim 14, wherein the secondary battery separator has a puncture strength of 300 to 600 gf.

16. The secondary battery separator of claim 14, wherein the secondary battery separator has a tensile strength of 800 to 2000 kgf/cm$^2$.

**INTERNATIONAL SEARCH REPORT**

International application No.
**PCT/KR2022/018010**

**A. CLASSIFICATION OF SUBJECT MATTER**

**C08F 297/08**(2006.01)i; **H01M 50/417**(2021.01)i; **H01M 50/494**(2021.01)i; **C08F 293/00**(2006.01)i; **C08F 4/659**(2006.01)i; **C08F 4/646**(2006.01)i

According to International Patent Classification (IPC) or to both national classification and IPC

**B. FIELDS SEARCHED**

Minimum documentation searched (classification system followed by classification symbols)

C08F 297/08(2006.01); C08F 10/02(2006.01); C08F 10/06(2006.01); C08F 110/06(2006.01); C08F 2/01(2006.01); C08F 210/06(2006.01); C08F 293/00(2006.01); C08F 4/646(2006.01); C08L 23/10(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 초고분자량 폴리프로필렌(ultra high molecular weight polyethylene), 에틸렌 단량체(ethylene monomer), 프로필렌 단량체(propylene monomer), 티타늄 화합물(titanium compound), 알킬알루미늄 화합물(alkyl aluminum compound), 실리콘 화합물(silicone compound)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2021-034260 A (TORAY IND. INC. et al.) 01 March 2021 (2021-03-01)<br>See paragraphs [0020]-[0039]. | 9-16<br>1-8 |
| A | KR 10-0503136 B1 (MITSUI CHEMICALS, INC.) 25 July 2005 (2005-07-25)<br>See entire document. | 1-16 |
| A | KR 10-2011-0108172 A (KOREA PETROCHEMICAL IND. CO., LTD.) 05 October 2011 (2011-10-05)<br>See entire document. | 1-16 |
| A | JP 4889483 B2 (PRIME POLYMER CO., LTD.) 07 March 2012 (2012-03-07)<br>See entire document. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **08 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018010**

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0067559 A (LOTTE CHEMICAL CORPORATION) 08 June 2021 (2021-06-08)<br>See entire document. | 1-16 |
| PX | KR 10-2398588 B1 (KOREA PETROCHEMICAL IND. CO., LTD.) 17 May 2022 (2022-05-17)<br>See entire document.<br>※ This document is the published patent of a priority application of the present internati onal application. | 1-16 |

Form PCT/ISA/210 (second sheet) (July 2022)

**INTERNATIONAL SEARCH REPORT**
**Information on patent family members**

International application No.
**PCT/KR2022/018010**

| Patent document cited in search report | Publication date (day/month/year) | Patent family member(s) | Publication date (day/month/year) |
|---|---|---|---|
| JP 2021-034260 A | 01 March 2021 | None | |
| KR 10-0503136 B1 | 25 July 2005 | CN 1241196 A | 12 January 2000 |
| | | CN 1241196 C | 12 January 2000 |
| | | EP 0942013 A1 | 15 September 1999 |
| | | EP 0942013 A4 | 27 December 2000 |
| | | EP 0942013 B1 | 04 February 2004 |
| | | JP 4083820 B2 | 30 April 2008 |
| | | KR 10-2000-0068700 A | 25 November 2000 |
| | | US 6350828 B1 | 26 February 2002 |
| | | WO 99-07752 A1 | 18 February 1999 |
| KR 10-2011-0108172 A | 05 October 2011 | KR 10-1161752 B1 | 02 July 2012 |
| JP 4889483 B2 | 07 March 2012 | CN 100567337 C | 09 December 2009 |
| | | CN 100972973 A | 30 May 2007 |
| | | EP 1731538 A1 | 13 December 2006 |
| | | EP 1731538 A4 | 04 June 2008 |
| | | EP 1731538 B1 | 19 June 2013 |
| | | JP 2008-097842 A1 | 28 February 2008 |
| | | KR 10-1140043 B1 | 02 May 2012 |
| | | KR 10-2007-0030768 A | 16 March 2007 |
| | | TW 200604210 A | 01 February 2006 |
| | | US 2007-0208138 A1 | 06 September 2007 |
| | | US 7732532 B2 | 08 June 2010 |
| | | WO 2005-097842 A1 | 20 October 2005 |
| KR 10-2021-0067559 A | 08 June 2021 | None | |
| KR 10-2398588 B1 | 17 May 2022 | KR 10-2486301 B1 | 09 January 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3157966 B1
- US 8008417 B
- KR 101161752